(19) Europäisches Patentamt
European Patent Office
Office européen des brevets

(11) **EP 3 254 798 B1**

(12) **EUROPEAN PATENT SPECIFICATION**

(45) Date of publication and mention of the grant of the patent:
**15.04.2020 Bulletin 2020/16**

(21) Application number: **16746399.1**

(22) Date of filing: **18.01.2016**

(51) Int Cl.:
*C04B 35/00* (2006.01)    *B23K 35/362* (2006.01)
*B23K 35/30* (2006.01)    *C22C 38/00* (2006.01)
*C22C 38/04* (2006.01)    *B23K 35/36* (2006.01)
*B23K 35/02* (2006.01)

(86) International application number:
**PCT/JP2016/051238**

(87) International publication number:
**WO 2016/125568 (11.08.2016 Gazette 2016/32)**

(54) **FLUX FOR USE IN SUBMERGED ARC WELDING**

FLUSSMITTEL ZU VERWENDUNG BEIM UNTERPULVERLICHTBOGENSCHWEISSEN

FLUX POUR SOUDAGE À L'ARC SUBMERGÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.02.2015 JP 2015018803**

(43) Date of publication of application:
**13.12.2017 Bulletin 2017/50**

(73) Proprietor: **Kabushiki Kaisha Kobe Seiko Sho (Kobe Steel, Ltd.)**
**Kobe-shi, Hyogo 651-8585 (JP)**

(72) Inventors:
• **KANO, Satoru**
  **Fujisawa-shi**
  **Kanagawa 251-8551 (JP)**
• **KOMURA, Masaharu**
  **Fujisawa-shi**
  **Kanagawa 251-8551 (JP)**
• **KOBAYASHI, Naoko**
  **Fujisawa-shi**
  **Kanagawa 251-0014 (JP)**

(74) Representative: **Müller-Boré & Partner**
**Patentanwälte PartG mbB**
**Friedenheimer Brücke 21**
**80639 München (DE)**

(56) References cited:
WO-A1-2008/072835        WO-A1-2015/019684
JP-A- H0 999 392          JP-A- S6 064 792
JP-A- S6 376 793          JP-A- H02 280 996
JP-A- H02 280 996         JP-A- H02 290 692
JP-A- H08 267 279         JP-A- S59 137 194
JP-A- S62 240 195         JP-A- S62 240 195
JP-A- 2010 125 508        JP-B2- S5 126 308

**Description**

Technical Field.

The present invention relates to fluxes for submerged arc welding.

Background Art

Fluxes for submerged arc welding are mainly classified into a fused flux and a sintered flux in terms of the form of flux. The fused flux is manufactured by fusing various raw materials in an electric furnace or the like and then crushing them. Meanwhile, the sintered flux is manufactured by bonding various raw materials together with a binder, such as alkaline silicate, granulating them, and then sintering the granules.

The sintered fluxes are classified, depending on the sintering temperature, into a low-temperature sintered flux produced by sintering at a temperature of 400°C or higher and lower than 600°C and a high-temperature sintered flux produced by sintering at a temperature between 600°C and 1,200°C. The low-temperature sintered flux has been conventionally studied from a variety of perspectives to reduce the diffusion of hydrogen into a weld metal (see Patent Documents 1 to 3). For example, Patent Documents 1 to 3 disclose techniques in which a proportion of carbonates in the flux is set within a specified range, thereby $CO_2$ gas is generated during welding, thus the partial pressure of $H_2$ gas is reduced.

To improve the moisture-absorption properties without using any carbonate, another means is proposed to reduce the hydrogen content in the weld metal by specifying an A value which is a characteristic value mainly derived from flux components, and a maximum value of a specific surface area of the flux (see Patent Document 4). Meanwhile, regarding the high-temperature sintered fluxes, a technique is proposed to reduce a diffusion hydrogen content, for example, by specifying the kinds and contents of a basic oxide, an alkali metal fluoride, an acidic oxide and the like in the flux (see Patent Documents 5 and 6).

Prior Art Document

Patent Document

Patent Document 1: JP S49-70839 A
Patent Document 2: JP S53-95144 A
Patent Document 3: JP S51-87444 A
Patent Document 4: JP H09-99392 A
Patent Document 5: JP S62-68695 A
Patent Document 6: WO 2008/072835 A1

Summary of the Invention

Problems to be Solved by the Invention

However, the above-mentioned techniques for improving the moisture-absorption properties and reducing the diffusion hydrogen content in the sintered flux have the following problems. First, in the low-temperature sintered fluxes with the carbonates added, as disclosed in Patent Documents 1 to 3, the use of a direct current welding power source increases the consumed amount of flux, further promotes the decomposition of the carbonates, compared to the use of an alternating current welding power source, and generates a large volume of CO gas or $CO_2$ gas during welding in some cases. Therefore, there is room for improvement in the roughness of a bead surface, the occurrence of pockmarks, and the appearance and shape of beads due to the generation of CO gas or $CO_2$ gas.

The technique disclosed in Patent Document 4 handles MnO as a hydrate component in the A value, which is an index indicative of the hydration properties. However, MnO can also become a non-hydrated component when MnO is used together with other flux components. Although the technique disclosed in Patent Document 4 tries to reduce the specific surface area of the flux, the specific surface area of the flux significantly affects the shield properties of a slag during welding. Specifically, when the specific surface area of the flux is reduced, the shield properties of the slag are impaired to increase a nitrogen content in the weld metal, thus the toughness of the weld metal is degraded.

Meanwhile, in the technique disclosed in Patent Document 5 regarding the high-temperature sintered flux, the flux components are designed mainly to be compatible with an alternating current welding power source. However, this technique never considers the degradation in welding workability that is most concerned about in the use of a direct current welding power source. In other words, when using a direct current welding power source, the flux disclosed in Patent Document 5 cannot attain the same effects as when using an alternating current welding power source.

Accordingly, it is an object of the present invention to provide a flux for submerged arc welding that has good welding workability and can reduce the moisture-absorption amount of the flux and the diffusion hydrogen content in a weld metal, even in the use of either an alternating current or a direct current welding power source.

Means for Solving the Problems

A flux for submerged arc welding according to the present invention is defined according to claim 1.

With this arrangement, the flux contains predetermined amounts of specific components and satisfies the numerical expression (I), so that the flux has the good welding workability, even in the use of either an alternating current or a direct current welding power source. Furthermore, the moisture-absorption amount of the flux and the diffusion hydrogen content in the weld metal are reduced.

Note that welding workability as used herein means the quality of the bead appearance and bead shape, the slag removability, the arc stability, and the resistance to defects of a weld metal.

The flux for submerged arc welding preferably further includes: water-soluble $Li_2O$: 0.3% by mass or less (including 0% by mass).

With this arrangement, the moisture-absorption properties of the flux are improved.

The flux for submerged arc welding preferably satisfies the following numerical expression (II), where $[TiO_2]$ is the $TiO_2$ content.

[Equation 2]

$$0.20 \leqq \frac{[MgO]}{[Al_2O_3]+[MnO]+[TiO_2]} \leqq 0.80 \quad \cdots \quad (II)$$

With this arrangement, the above-mentioned respective components are contained in the predetermined amounts and, additionally, are controlled more strictly, thereby the welding workability is further improved and the diffusion hydrogen content in the weld metal is reduced.

The flux for submerged arc welding in the present invention is obtained by sintering, for example, at a temperature of 800°C or higher.

Effects of the Invention

According to the present invention, since the contents of the respective components are specified, and the ratio of the Mg content to the total content of Al and Mn is set within a specified range, the flux for submerged arc welding can have good welding workability, even in the use of either an alternating current or a direct current welding power source, and can further reduce the moisture-absorption amount of the flux and the diffusion hydrogen content in the weld metal.

Brief Description of the Drawings

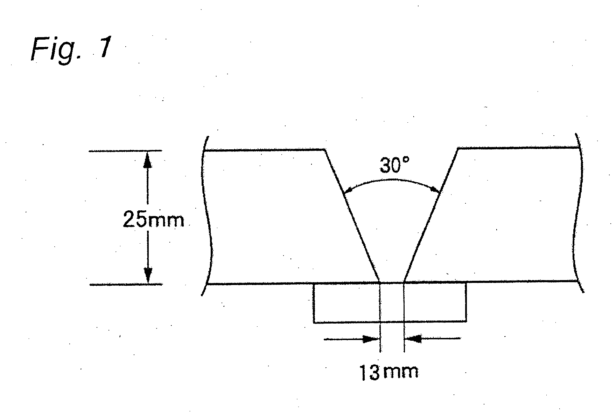

Fig. 1 is a side view showing the shape of a groove in a test specimen used in a welding test in Examples.

Mode for Carrying Out the Invention

Embodiments for carrying out the present invention will be described in detail below. Note that the present invention is not limited to the embodiments described below.

The inventors have intensively studied by experiments to solve the above-mentioned problems and found out the following. When using a direct current welding power source, to keep the slag removability adequate, the content of $SiO_2$ in the flux should be reduced as much as possible. Regarding MgO, unless the amount of added MgO is set more than that in the flux disclosed in Patent Document 5, the slag removability cannot be improved.

A flux for submerged arc welding according to the embodiment of the present invention (hereinafter simply referred to as a flux) is set such that a $SiO_2$ content is in a range of 10 to 30% by mass, a MgO content is in a range of 10 to 25% by mass, and a water-soluble $SiO_2$ content is 1.0% by mass or less. In the flux of the present embodiment, the respective components are adjusted to satisfy the numerical expression (I) below, where $[Al_2O_3]$ is the $Al_2O_3$ content, $[MgO]$ is the MgO content, and $[MnO]$ is a content as the Mn in terms of MnO.

[Equation 3]

$$0.20 \leq \frac{[MgO]}{[Al_2O_3] + [MnO]} \leq 0.80 \qquad \cdots \quad ( I )$$

Moreover, the flux in the present embodiment restricts an $Al_2O_3$ content; a F content in terms of $CaF_2$; a Mn content in terms of MnO; a total content of a Na content in terms of $Na_2O$, a K content in terms of $K_2O$ and a Li content in terms of $Li_2O$; a Fe content in terms of FeO; a CaO content; a water-soluble $Na_2O$ content; and a water-soluble $K_2O$ content.

The reason for restricting the composition of the flux in the present embodiment will be described below. Note that the content of each component in the flux of the present embodiment is a value obtained by converting a value quantified by a method defined by JIS Z 3352:2010, in terms of oxide or fluoride, unless otherwise specified. The content of each component is its content relative to the entire flux.

[$Al_2O_3$: 15 to 35% by mass]

$Al_2O_3$ is a component for adjusting the viscosity and melting point of molten slag and has the effect of making the bead shape better during welding. However, when the $Al_2O_3$ content is less than 15% by mass, the above-mentioned effect cannot be sufficiently exhibited. Meanwhile, when the $Al_2O_3$ content exceeds 35% by mass, the melting point of the molten slag is raised extremely high, and degradation of the bead shape during welding occurs. Therefore, the $Al_2O_3$ content is set at 15 to 35% by mass.

From the perspective of adjusting the viscosity and melting point of the molten slag, the $Al_2O_3$ content is preferably 20% by mass or more, and more preferably 23% by mass or more. From the perspective of the melting point of the molten slag, the $Al_2O_3$ content is preferably 30% by mass or less, and more preferably 28% by mass or less. This can further make the bead shape better.

Note that $Al_2O_3$ content as used herein means a value obtained by expressing, in terms of $Al_2O_3$, the whole Al content in the flux that is determined by analysis with a method defined by JIS Z 3352:2010 (e.g., JIS M 8220:1995 and the like). The whole Al content measured by this method sometimes contains components other than $Al_2O_3$, such as $AlF_3$. However, the contents of these components are very little. Thus, the components do not affect the effects of $Al_2O_3$, mentioned above, as long as the $Al_2O_3$ content (the whole amount of Al in terms of $Al_2O_3$) is set in the above-mentioned range.

[$SiO_2$: 10 to 25% by mass]

$SiO_2$ has the effects of mainly making the bead appearance and the bead shape better by imparting the appropriate viscosity to the molten slag. When the $SiO_2$ content is less than 10% by mass, however, the above-mentioned effect is not sufficiently obtained, thus the bead appearance and bead shape are degraded. Meanwhile, when the $SiO_2$ content exceeds 25% by mass, the viscosity of the slag becomes excessive, the slag removability is degraded, and seizure of the slags becomes severe. Therefore, the $SiO_2$ content is set at 10 to 25% by mass.

From the perspective of improving the bead appearance and the bead shape, the $SiO_2$ content is preferably 15% by mass or more, and more preferably 18% by mass or more. From the perspective of the appropriate viscosity of the molten slag, the $SiO_2$ content is preferably 22% by mass or less.

Note that $SiO_2$ content as used herein means a value obtained by expressing, in terms of $SiO_2$, the whole Si content in the flux that is determined by analysis with the method defined by JIS Z 3352:2010 (e.g., JIS M 8214:1995 and the like). The whole Si content measured by this method contains components, other than $SiO_2$, such as Si added as a component of an alloy of Fe-Si and the like. However, these components do not affect the effects of $SiO_2$, mentioned above, as long as the $SiO_2$ content (the whole amount of Si in terms of $SiO_2$) is set in the above-mentioned range.

[MgO: 10 to 25% by mass]

MgO is a component that significantly contributes to improving the slag removability, and thus is essential for ensuring the good slag removability regardless of the type of a welding power source. However, when the MgO content is less than 10% by mass, the effect of MgO cannot be sufficiently obtained. Meanwhile, when the MgO content exceeds 25% by mass, the bead shape is degraded, and defects, such as slag inclusions, lack of fusion and further undercuts, are more likely to occur, depending on the type of the welding power source. In particular, in an alternating current welding power source, the welding defects, such as the slag inclusions and the lack of fusion, mentioned above, occur remarkably. Therefore, the MgO content is set at 10 to 25% by mass.

From the perspective of improving the slag removability, the MgO content is preferably 13% by mass or more, and more preferably 15% by mass or more. From the perspective of suppressing the occurrence of the defects, the MgO content is preferably 23% by mass or less, and more preferably 21% by mass or less.

Note that MgO content as used herein means a value obtained by expressing, in terms of MgO, the whole Mg content in the flux that is determined by analysis with the method defined by JIS Z 3352:2010 (e.g., JIS M 8222:1997 and the like). The whole Mg content measured by this method sometimes contains components other than MgO, such as $MgF_2$. However, the contents of the components are very little. Thus, these components do not affect the effects of MgO, mentioned above, as long as the MgO content (the whole amount of Mg in terms of MgO) is set in the above-mentioned range.

[F in terms of $CaF_2$: 10 to 25% by mass]

A fluoride, such as $CaF_2$, has the effect of enhancing the electric conductivity and the fluidity of a molten slag, and is one of components that affect the high-temperature viscosity of the molten slag. This function is proportional to its content, like CaO to be mentioned later. Specifically, when the F content (in terms of $CaF_2$) is less than 10% by mass, the above-mentioned effect cannot be sufficiently exhibited and it cannot also be expected to exhibit another effect of promoting exhaust of CO gas from the molten slag to improve the resistance to pockmark.

Meanwhile, when the F content (in terms of $CaF_2$) exceeds 25% by mass, the fluidity of the molten slag becomes excessively high, thereby the bead shape is degraded. Thus, the F content (in terms of $CaF_2$) is set at 10 to 25% by mass. From the perspective of improving the resistance to pockmark, the F content (in terms of $CaF_2$) is preferably 13% by mass or more, and more preferably 15% by mass or more. From the perspective of improving the bead shape, the F content (in terms of $CaF_2$) is preferably 22% by mass or less, and more preferably 20% by mass or less.

Note that F content as used herein means a value obtained by expressing, in terms of $CaF_2$, the whole F content in the flux that is determined by analysis with the method defined by JIS Z 3352:2010 (e.g., JIS K 1468-2:1999 and the like). The fluoride component in the flux of the present embodiment is mainly $CaF_2$, but sometimes includes $AlF_3$, $MgF_2$ or the like, in addition thereto. However, these do not affect the effects of the fluoride, mentioned above, as long as the F content (the whole amount of F in terms of $CaF_2$) is set in the above-mentioned range.

[Mn in terms of MnO: 3 to 20% by mass]

Mn is a component that affects the viscosity and solidification temperature of the molten slag and which is effective in improving the resistance to pockmark. Mn is added, mainly in the form of oxide, such as MnO, $MnO_2$ and $Mn_2O_3$. Among these various forms, particularly, the addition of Mn in the form of manganese monoxide (MnO) exhibits its effectiveness. When the Mn content (in terms of MnO) is less than 3% by mass, its effects cannot be sufficiently exhibited. Meanwhile, when the Mn content exceeds 20% by mass, the slag becomes fragile, and the slag removability is degraded. Thus, the Mn content (in terms of MnO) is set at 3 to 20% by mass.

From the perspective of improving the resistance to pockmark, the Mn content (in terms of MnO) is preferably 6% by mass or more, and more preferably 8% by mass or more. From the perspective of improving the slag removability, the Mn content (in terms of MnO) is preferably 15% by mass or less, and more preferably 12% by mass or less. Note that Mn content as used herein means a value obtained by expressing, in terms of MnO, the whole Mn content in the flux that is determined by analysis with the method defined by JIS Z 3352:2010 (e.g., JIS M 8232:2005 and the like).

[Total of at least one or more of Na in terms of $Na_2O$, K in terms of $K_2O$ and Li in terms of $Li_2O$: 0.5 to 6.5% by mass] (i.e., a total of Na in terms of $Na_2O$, K in terms of $K_2O$ and Li in terms of $Li_2O$: 0.5 to 6.5% by mass (including at least one or more elements of Na, K and Li))

Na, K and Li are components that mainly affect the arc stability during welding and the moisture-absorption properties of the flux, and are added, mainly in the form of oxide, such as $Na_2O$, $K_2O$ and $Li_2O$. However, when the total of the Na content (in terms of $Na_2O$), the K content (in terms of $K_2O$) and the Li content (in terms of $Li_2O$) is less than 0.5% by mass, the arc voltage during welding becomes unstable, thus the bead appearance and the bead shape are degraded.

Meanwhile, when the total of the Na content (in terms of $Na_2O$), the K content (in terms of $K_2O$) and the Li content (in terms of $Li_2O$) exceeds 6.5% by mass, the moisture-absorption properties of the flux are degraded, and the arc becomes extremely strong and thereby unstable, thus the bead appearance and the bead shape are degraded.

Thus, the total of the Na content (in terms of $Na_2O$), the K content (in terms of $K_2O$) and the Li content (in terms of $Li_2O$) is set within a range of 0.5 to 6.5% by mass. Note that in the flux of the present embodiment, at least one element of Na, K and Li may be added.

From the perspective of stabilizing the arc voltage, the total of the Na content (in terms of $Na_2O$), the K content (in terms of $K_2O$) and the Li content (in terms of $Li_2O$) is preferably 1.5% by mass or more, and more preferably 2.0% by mass or more. From the perspective of the moisture-absorption properties of the flux and the arc stability, the total of the Na content (in terms of $Na_2O$), the K content (in terms of $K_2O$) and the Li content (in terms of $Li_2O$) is preferably 5.5% by mass or less, and more preferably 4.5% by mass or less.

Note that Na content, K content and Li content as used herein mean values obtained by expressing, in terms of $Na_2O$, $K_2O$ and $Li_2O$ respectively, the whole Na content, the whole K content and the whole Li content in the flux that are determined by analysis with the method defined by JIS Z 3352:2010 (e.g., JIS M 8852:1998 and the like). The Na component, the K component and the Li component of the flux in the present embodiment are mainly $Na_2O$, $K_2O$, and $Li_2O$, respectively, but additionally, sometimes include $NaAlSi_3O_8$, $KAlSi_3O_8$, $LiAlSi_3O_8$ and the like.

Here, Na, K and Li are derived from mineral raw materials or liquid glass.

[Fe in terms of FeO: 0.5 to 8% by mass]

Fe has the effect of promoting a deoxidation phenomenon to enhance the resistance to pockmark, and is added, mainly in the form of metal powder such as Fe-Si. The above-mentioned effect is proportional to the amount of presence of Fe. When the Fe content (in terms of FeO) is less than 0.5% by mass, particularly, in the use of a direct current welding power source, the effect cannot be sufficiently obtained. On the other hand, the Fe content (in terms of FeO) exceeding 8% by mass affects the solidification temperature of the slag, thus the bead appearance, the bead shape and the slag removability are degraded. Therefore, the Fe content (in terms of FeO) is set at 0.5 to 8% by mass.

From the perspective of the resistance to pockmark, the Fe content (in terms of FeO) is preferably 1% by mass or more, and more preferably 2% by mass or more. When the influence of a slag on the solidification temperature is taken into consideration, the Fe content (in terms of FeO) is preferably 6% by mass or less, and more preferably 4% by mass or less.

Note that Fe content as used herein means a value obtained by expressing, in terms of FeO, the whole Fe content in the flux that is determined by analysis with the method defined by JIS Z 3352:2010 (e.g., JIS M 8202:2000 and the like). The Fe content sometimes includes, in addition to Fe added as the metal powder, the content of FeO, $Fe_2O_3$, $Fe_3O_4$ and the like, that are added as inevitable impurities.

[CaO as a corresponding value: 6% by mass or less (including 0% by mass)]

CaO is a component that increases the basicity of the slag, thereby the cleaning degree of weld metal is enhanced, and also affects the fluidity of the molten slag. CaO exhibits the aforesaid effects in proportion to the amount of presence of CaO. However, when the CaO content exceeds 6% by mass, the fluidity of the molten slag becomes excessive to degrade the bead appearance and the bead shape. Therefore, the CaO content is restricted to 6% by mass or less (including 0% by mass).

From the perspective of the fluidity of the molten slag, the CaO content is preferably 4% by mass or less, and more preferably 3% by mass or less. From the perspective of improving the cleaning degree of the weld metal, the CaO content is preferably 0.5% by mass or more.

Note that the flux in the present embodiment includes, as a Ca component, $CaF_2$ mentioned above, in addition to CaO. For this reason, CaO content as used herein means a corresponding value determined from the whole Ca content and the whole F content that are obtained by analysis with the method defined by JIS Z 3352:2010. Thus, if the $CaF_2$ content is very large, according to JIS Z 3352:2010, the CaO content can be 0 in some cases.

[Water-soluble $SiO_2$: 0.01 to 1.0% by mass]

The water-soluble $SiO_2$ content is restricted so as to become 1.0% by mass or less after performing a sintering process in order to prevent the degradation in the resistance to moisture-absorption of the flux and to suppress an increase in the diffusion hydrogen content in a weld metal. When the water-soluble $SiO_2$ content exceeds 1.0% by mass, the resistance to moisture-absorption of the flux is degraded, and the diffusion hydrogen content in the weld metal is increased. Thus, the water-soluble $SiO_2$ content is set at 1.0% by mass or less (including 0% by mass).

From the perspective of the welding workability, the water-soluble $SiO_2$ content is 0.01% by mass or more, and preferably 0.1% by mass or more. From the perspective of improving the resistance to moisture-absorption and reducing the diffusion hydrogen content, the water-soluble $SiO_2$ content is preferably 0.8% by mass or less, and more preferably 0.6% by mass or less.

The water-soluble $SiO_2$ is derived mainly from a binding agent, such as liquid glass. To reduce its content, it is effective to sinter the flux at a temperature equal to or higher than a temperature at which the binding agent is less likely to absorb moisture. Specifically, it is particularly preferable that the sintering temperature is set at 800°C or higher. The water-soluble $SiO_2$ content can be controlled mainly by adjusting components and content of the liquid glass and the sintering temperature.

Note that the water-soluble $SiO_2$ content in the flux can be measured by the following method. First, the flux is crushed into a particle size of 300 μm or less by a vibrational mill, followed by sampling about 0.2 g of a specimen for measurement therefrom (step 1). Then, the above-mentioned specimen and 100 ml of distilled water are charged into a conical flask made of quartz, and boiled for 4 hours, thereby soluble components are extracted (step 2). After leaving the extracted solution for 12 hours or more, precipitates, floating substances and the like in the extracted solution are removed, and then the Si content is quantified by an absorption photometry (step 3).

Note that water-soluble $SiO_2$ as used herein means a value obtained by converting the whole Si content in the flux determined by analysis using the method mentioned above to $SiO_2$, but this water-soluble $SiO_2$ is discriminated from the above-mentioned whole $SiO_2$ and its content is specified.

[Water-soluble $Na_2O$: 0.01 to 1.0% by mass]

The water-soluble $Na_2O$ content is restricted so as to become 1.0% by mass or less after performing a sintering process in order to prevent the degradation in the resistance to moisture-absorption of the flux and to suppress an increase in the diffusion hydrogen content in a weld metal. When the water-soluble $Na_2O$ content exceeds 1.0% by mass, the resistance to moisture-absorption of the flux is degraded, and the diffusion hydrogen content in the weld metal is increased. Thus, the water-soluble $Na_2O$ content is set at 1.0% by mass or less (including 0% by mass).

From the perspective of the welding workability, the water-soluble $Na_2O$ content is 0.01% by mass or more, and preferably 0.1% by mass or more. From the perspective of improving the resistance to moisture-absorption and reducing the diffusion hydrogen content, the water-soluble $Na_2O$ content is preferably 0.8% by mass or less, and more preferably 0.5% by mass or less.

The water-soluble $Na_2O$ is derived mainly from a binding agent, such as liquid glass. To reduce its content, it is effective to sinter the flux at a temperature equal to or higher than a temperature at which the binding agent is less likely to absorb moisture. Specifically, it is particularly preferable that the sintering temperature is set at 800°C or higher. The water-soluble $Na_2O$ content can be controlled mainly by adjusting components and content of the liquid glass and the sintering temperature.

Note that the water-soluble $Na_2O$ content in the flux can be quantified by the absorption photometry, like the measurement of the water-soluble $SiO_2$ content as mentioned above.

Further, water-soluble $Na_2O$ as used herein means a value obtained by expressing, in terms of $Na_2O$, the whole Na content in the flux determined by analysis using the method mentioned above, but this water-soluble $Na_2O$ is discriminated from the above-mentioned whole $Na_2O$ and its content is specified.

[Water-soluble $K_2O$: 0.01 to 0.8% by mass]

The inventors have found that the addition of an appropriate amount of water-soluble $K_2O$ into a liquid glass has the effect of decreasing the temperature at which the liquid glass is less likely to absorb moisture. That is, in a flux, which is subjected to a sintering process at 800°C or higher by using a liquid glass to which the appropriate amount of the water-soluble $K_2O$ is added, when the water-soluble $K_2O$ content satisfies a control range of 0.8% by mass or less, the resistance to moisture-absorption of the flux is significantly improved, compared to a conventional flux.

The water-soluble $K_2O$ content is restricted so as to become 0.8% by mass or less (including 0% by mass) after performing the sintering process in order to prevent the degradation in the resistance to moisture-absorption of the flux and to suppress an increase in the diffusion hydrogen content in a weld metal. When the water-soluble $K_2O$ content exceeds 0.8% by mass, the resistance to moisture-absorption of the flux is degraded, and the diffusion hydrogen content in the weld metal is increased. Thus, the water-soluble $K_2O$ content is set at 0.8% by mass or less.

From the perspective of the welding workability, the water-soluble $K_2O$ content is 0.01% by mass or more, and preferably 0.1% by mass or more. From the perspective of improving the resistance to moisture-absorption and reducing the diffusion hydrogen content, the water-soluble $K_2O$ content is preferably 0.6% by mass or less, and more preferably 0.4% by mass or less.

The water-soluble $K_2O$ is derived mainly from a binding agent, such as liquid glass. To reduce its content, it is effective to sinter the flux at a temperature equal to or higher than a temperature at which the binding agent is less likely to absorb moisture. Specifically, it is particularly preferable that the sintering temperature is set at 800°C or higher. The water-soluble $K_2O$ content can be controlled mainly by adjusting the components and content of the liquid glass and the sintering temperature.

Note that the water-soluble $K_2O$ content in the flux can be quantified by the absorption photometry, like the measurement of the water-soluble $SiO_2$ content as mentioned above.

Note that water-soluble $K_2O$ as used herein means a value obtained by expressing, in terms of $K_2O$, the whole K content in the flux determined by analysis using the method mentioned above, but this water-soluble $K_2O$ is discriminated from the above-mentioned whole $K_2O$ and its content is specified.

The flux of the present embodiment may contain water-soluble $Li_2O$, in addition to the components mentioned above.

[Water-soluble $Li_2O$: 0.3% by mass or less (including 0% by mass)]

The water-soluble $Li_2O$ has the effect of further improving the moisture-absorption properties depending on the added amount thereof. Note that when the water-soluble $Li_2O$ content after performing the sintering process exceeds 0.3% by mass, the arc stability is degraded, and the bead appearance and the bead shape are also degraded. Thus, when the water-soluble $Li_2O$ is added, the water-soluble $Li_2O$ content is set at 0.3% by mass or less (including 0% by mass). From the perspective of improving the arc stability and improving the bead appearance and the bead shape, the water-soluble $Li_2O$ content is preferably 0.2% by mass or less, and more preferably 0.15% by mass or less. From the perspective of the moisture-absorption properties, the water-soluble $Li_2O$ content is more preferably 0.05% by mass or more.

The water-soluble $Li_2O$ is derived mainly from a binding agent, such as liquid glass. To reduce its content, it is effective to sinter the flux at a temperature equal to or higher than a temperature at which the binding agent is less likely to absorb moisture. Specifically, it is particularly preferable that the sintering temperature is set at 800°C or higher. The water-soluble $Li_2O$ content can be controlled mainly by adjusting components and content of the liquid glass and the sintering temperature.

Note that the water-soluble $Li_2O$ content in the flux can be quantified by the absorption photometry, -like the measurement of the water-soluble $SiO_2$ content as mentioned above.

Note that water-soluble $Li_2O$ as used herein means a value obtained by expressing, in terms of $Li_2O$, the whole Li content in the flux determined by analysis using the method mentioned above, but this water-soluble $Li_2O$ is discriminated from the above-mentioned whole $Li_2O$ and its content is specified.

$[[MgO] / ([Al_2O_3] + [MnO]) : 0.20$ to $0.80]$

The respective contents of MgO, $Al_2O_3$ and Mn are specified individually. Further, the flux of the present embodiment also specifies the ratio of the MgO content (% by mass) to the total content of the $Al_2O_3$ content (% by mass) and the Mn content (in terms of MnO) (% by mass) (= $[MgO] / ([Al_2O_3] + [MnO])$).

The inventors have studied by various experiments about the moisture-absorption properties and welding workability of the flux with MgO added thereto, and as a result, found out that the ratio of the MgO content to the total content of the $Al_2O_3$ content and Mn content (in terms of MnO) (= $[MgO] / (-[Al_2O_3] + [MnO])$) significantly affects the moisture-absorption properties and welding workability. For example, in the use of a direct current welding power source, the consumed amount of the flux is increased, compared to in the use of an alternating current welding power source. Thus, the Si content in the weld metal is increased to drastically degrade the slag removability. However, the slag removability can be improved by addition of MgO.

However, since MgO has excellent hydration properties, the addition of MgO into the flux degrades the moisture-absorption properties, and the diffusion hydrogen content in the weld metal is increased. Meanwhile, $Al_2O_3$ and Mn are non-hydrous components, and have the great effect of improving the moisture-absorption properties by addition. Unlike the conventional knowledge in the related art, it is found out that among them, Mn is used together with $Al_2O_3$ to exhibit the effect of improving the moisture-absorption properties of the flux to contribute to decreasing the diffusion hydrogen content.

Note that when $[[MgO] / ([Al_2O_3] + [MnO])$ is less than 0.20, the slag removability is drastically degraded in the welding by a direct current welding power source. Meanwhile, when $[[MgO]/([Al_2O_3] + [MnO])$ exceeds 0.80, the moisture-absorption properties are degraded, and the diffusion hydrogen content in the weld metal is increased. Thus, the amount of each component added is adjusted such that $[MgO] / ([Al_2O_3] + [MnO])$ is in a range of 0.20 to 0.80. Thus, the degradation in moisture-absorption properties can be suppressed.

From the perspective of improving the slag removability, $[MgO]/([Al_2O_3] + [MnO])$ is preferably 0.30 or more, and more preferably 0.40 or more. From the perspective of improving the resistance to moisture-absorption and reducing the diffusion hydrogen content, $[MgO] / ([Al_2O_3] + [MnO])$ is preferably 0.70 or less, and more preferably 0.60 or less.

[TiO$_2$: 8% by mass or less (including 0% by mass)]

The flux of the present embodiment may contain TiO$_2$, in addition to the components mentioned above. TiO$_2$ is a component that is effective in improving the slag removability and also has the effect of making the bead shape better. A part of TiO$_2$ is converted into Ti by a reduction reaction during welding, and then the Ti is added into the weld metal, thereby contributing to improving the toughness of the flux.

The above-mentioned effect is proportional to the amount of presence of TiO$_2$ (TiO$_2$ content) . However, when the upper limit of the TiO$_2$ content exceeds 8% by mass, the bead shape is degraded. Thus, when TiO$_2$ is added, the TiO$_2$ content needs to be 8% by mass or less (including 0% by mass). From the perspective of the bead shape, the TiO$_2$ content is more preferably 6% by mass or less, and further preferably 4% by mass or less. The lower limit of the TiO$_2$ content is not particularly limited, but is preferably 1% by mass or more from the perspective of the slag removability and the bead shape.

When TiO$_2$ is added to the flux, the following numerical expression (II) is preferably satisfied, thereby the welding workability in the use of a direct current welding power source is further improved, and the effect of reducing the diffusion hydrogen content in the weld metal is enhanced. Note that [TiO$_2$] in the following numerical expression (II) is the TiO$_2$ content (% by mass). Note that the numerical expression (II) below is determined experimentally.

[Equation 4]

$$0.20 \leqq \frac{[MgO]}{[Al_2O_3]+[MnO]+[TiO_2]} \leqq 0.80 \quad \cdot \cdot \cdot \quad (\text{I I})$$

In the above-mentioned numerical expression (II), from the perspective of improving the welding workability and reducing the diffusion hydrogen content in the weld metal, [MgO]/([Al$_2$O$_3$] + [MnO] + [TiO$_2$]) is more preferably 0.25 or more, and further preferably 0.35 or more. [MgO] / ([Al$_2$O$_3$] + [MnO] + [TiO$_2$]) is more preferably 0.65 or less, and further preferably 0.55 or less.

Note that TiO$_2$ content as used herein means a value obtained by expressing, in terms of TiO$_2$, the whole Ti content in the flux that is determined by analysis with the method defined by JIS Z 3352:2010 (e.g., JIS M 8219-1:2012 and the like) to TiO$_2$.

[C: 0.2% by mass or less (including 0% by mass)]

C is derived from a carbonate and the like included as an impurity in each raw material of the flux, and inevitably introduced thereinto. On the other hand, as mentioned above, in the use of a direct current welding power source, the consumed amount of the flux is increased, and the decomposition of the carbonate is further promoted, compared to in the use of an alternating current welding power source. Thus, even if the C content is very small, a large volume of CO gas or CO$_2$ gas is generated during welding, thereby the resistance to pockmark and the bead appearance and bead shape are degraded. Thus, to prevent the degradation in the welding workability, the C content in the flux is preferably reduced to 0.2% by mass or less (including 0% by mass).

In particular, from the perspective of improving the resistance to pockmark, the C content is preferably restricted to 0.1% by mass or less, and more preferably 0.05% by mass or less. Note that to keep the resistance to pockmark adequate, the C content is preferably as small as possible. However, since it is difficult to set the C content at 0% by mass, the lower limit of the C content only needs to be 0.01% by mass. C content as used herein means a value determined by analysis with the method defined by JIS Z 2615:2009.

[Other Components]

Components other than the above-mentioned components in the flux of the present embodiment are inevitable impurities, such as Zr, Ba, P and S. Among these inevitable impurities, the content of each of Zr and Ba is preferably restricted to 1.0% by mass or less, and particularly, the content of each of P and S, which affects the quality of welding, is preferably restricted to 0.05% by mass or less. The total content of Zr, Ba, P and S is preferably 0.1% by mass or less.

[Manufacturing Method]

When manufacturing the flux of the present embodiment, for example, raw material powder is blended to have the above-mentioned composition, then mixed and kneaded together with a binding agent, granulated and sintered. At this time, for example, polyvinyl alcohol or liquid glass can be used as the binding agent (binder). Granulation methods preferably include but are not limited to, methods using a rolling granulator, an extrusion granulator and the like.

Further, the granulated flux is subjected to particle-size regulation such as dust removal and crushing of coarse particles, thereby particles of the flux preferably have a particle size of 2.5 mm or less. On the other hand, the sintering process after the granulation can be performed by a rotary kiln, a stationary batch furnace, a belt baking furnace and the like. The sintering temperature at this time can be set, for example, at 600 to 1,200°C. From the perspective of making the binder less likely to absorb moisture as mentioned above, the sintering temperature is preferably set at 800°C or higher. The sintering temperature is more preferably 830°C or higher. The sintering temperature is preferably 850°C or lower. Note that a flux subjected to the sintering at a temperature of 600 to 1,200°C is a high-temperature sintered flux.

As mentioned above in detail, the flux of the present embodiment sets the contents of each component in the specified range, and adjusts the contents of the respective components such that the ratio of the Mg content to the total content of Al and Mn falls within a specified range. Thus, even when using either an alternating current or a direct current welding power source, the welding workability is good, and the moisture-absorption amount of the flux and the diffusion hydrogen content in the weld metal can be reduced.

The composition of the flux of the present embodiment is suitable for use as the high-temperature sintered flux. However, even if this composition is applied to a fused flux, the same effects as those of the high-temperature sintered flux can be obtained.

Examples

The effects of the present invention will be specifically described by way of Examples of the present invention and Comparative Examples. In these Examples and Comparative Examples, submerged arc welding tests were performed using steel sheets shown in Table 1 below and wires shown in Table 2, by the groove shape shown in Fig. 1, under welding conditions (A or B) shown in Table 3 below. The qualities of the fluxes in Examples shown in Table 4 below and in Comparative Examples shown in Table 5 below were evaluated. In Examples and Comparative Examples, raw materials were blended to have the compositions shown in Table 4 and 5, then mixed and kneaded together with a binding agent (liquid glass), granulated and further sintered using a rotary kiln at the temperatures shown in Table 4 or 5 below, followed by the particle-size regulation, thereby the fluxes having the particle size of 2.5 mm or less were obtained. Note that in Tables 4 and 5, regarding components not satisfying the ranges specified by the present invention, respective numerical values of these components are underlined.

[Table 1]

| Sheet thickness (mm) | Composition (% by mass) | | | | |
|---|---|---|---|---|---|
| | C | Si | Mn | P | S |
| 25 | 0.16 | 0.33 | 1.34 | 0.009 | 0.003 |

[Table 2]

| Composition (% by mass) | | | | |
|---|---|---|---|---|
| C | Si | Mn | P | S |
| 0.11 | 0.23 | 1.03 | 0.007 | 0.012 |

[Table 3]

| No. | Polarity | Welding current (A) | Arc voltage (V) | Welding speed (cpm) | Projection length (mm) | Interpass temperature (°C) |
|---|---|---|---|---|---|---|
| A | DC-EP | 550 | 30 | 42 | 30 | ≤ 150 |
| B | AC | 550 | 30 | 42 | 30 | ≤ 150 |

[Table 4]

| | No. | Al$_2$O$_3$ | SiO$_2$ | | | MgO | F in terms of CaF$_2$ | Mn in terms of MnO | Na in terms of Na$_2$O + K in terms of K$_2$O + Li in terms of Li$_2$O | Fe in terms of FeO | TiO$_2$ | Water-soluble SiO$_2$ | Water-soluble Na$_2$O | Water-soluble K$_2$O | Water-soluble Li$_2$O | CaO | C | M(I) | M(II) | Sintering temperature (°C) |
|---|---|---|---|---|---|---|---|---|---|---|---|---|---|---|---|---|---|---|---|---|
| | | | Derived from alloy | Derived from mineral | Total | | | | | | | | | | | | | | | |
| Example | 1 | 26 | 4 | 16 | 20 | 15 | 20 | 10 | 2.5 | 3 | 2 | 0.3 | 0.4 | 0.3 | 0 | 2 | 0.013 | 0.42 | 0.39 | 850 |
| | 2 | 35 | 4 | 7 | 11 | 17 | 19 | 10 | 2.6 | 3 | 2 | 0.3 | 0.4 | 0.3 | 0 | 1 | 0.016 | 0.38 | 0.36 | 850 |
| | 3 | 16 | 4 | 25 | 29 | 19 | 18 | 9 | 2.4 | 3 | 2 | 0.4 | 0.5 | 0.3 | 0 | 2 | 0.025 | 0.76 | 0.70 | 850 |
| | 4 | 34 | 4 | 15 | 19 | 10 | 18 | 10 | 2.4 | 3 | 2 | 0.4 | 0.4 | 0.2 | 0 | 2 | 0.023 | 0.23 | 0.22 | 850 |
| | 5 | 16 | 4 | 15 | 19 | 25 | 15 | 16 | 2.4 | 3 | 2 | 0.5 | 0.7 | 0.4 | 0 | 2 | 0.019 | 0.78 | 0.74 | 850 |
| | 6 | 34 | 4 | 14 | 18 | 19 | 11 | 9 | 2.4 | 3 | 2 | 0.6 | 0.8 | 0.3 | 0 | 2 | 0.018 | 0.44 | 0.42 | 850 |
| | 7 | 15 | 4 | 16 | 20 | 20 | 24 | 12 | 2.5 | 3 | 2 | 0.4 | 0.4 | 0.1 | 0 | 2 | 0.015 | 0.74 | 0.69 | 850 |
| | 8 | 35 | 4 | 14 | 18 | 19 | 16 | 3 | 2.5 | 3 | 2 | 0.4 | 0.4 | 0.3 | 0 | 2 | 0.020 | 0.50 | 0.48 | 850 |
| | 9 | 16 | 4 | 13 | 17 | 20 | 18 | 20 | 2.4 | 3 | 2 | 0.4 | 0.4 | 0.2 | 0 | 2 | 0.015 | 0.56 | 0.53 | 850 |
| | 10 | 24 | 4 | 25 | 29 | 10 | 17 | 11 | 2.5 | 3 | 2 | 0.4 | 0.3 | 0.3 | 0 | 2 | 0.018 | 0.29 | 0.27 | 850 |
| | 11 | 27 | 4 | 7 | 11 | 24 | 16 | 13 | 2.5 | 3 | 2 | 0.7 | 0.8 | 0.4 | 0 | 2 | 0.022 | 0.60 | 0.57 | 850 |
| | 12 | 25 | 4 | 26 | 30 | 16 | 10 | 10 | 2.5 | 3 | 2 | 0.4 | 0.5 | 0.3 | 0 | 2 | 0.030 | 0.46 | 0.43 | 850 |
| | 13 | 26 | 4 | 7 | 11 | 18 | 24 | 11 | 2.6 | 3 | 3 | 0.4 | 0.5 | 0.4 | 0 | 2 | 0.025 | 0.49 | 0.45 | 850 |
| | 14 | 26 | 4 | 25 | 29 | 16 | 17 | 3 | 2.6 | 3 | 2 | 0.3 | 0.3 | 0.4 | 0 | 2 | 0.032 | 0.55 | 0.52 | 850 |
| | 15 | 25 | 4 | 6 | 10 | 17 | 19 | 19 | 2.5 | 3 | 2 | 0.4 | 0.3 | 0.3 | 0 | 3 | 0.013 | 0.39 | 0.37 | 850 |
| | 16 | 23 | 5 | 16 | 21 | 25 | 12 | 10 | 2.3 | 4 | 1 | 0.4 | 0.8 | 0.3 | 0 | 2 | 0.046 | 0.76 | 0.74 | 850 |
| | 17 | 25 | 4 | 16 | 20 | 11 | 25 | 11 | 2.4 | 3 | 1 | 0.3 | 0.4 | 0.3 | 0 | 2 | 0.014 | 0.31 | 0.30 | 850 |
| | 18 | 27 | 4 | 15 | 19 | 24 | 17 | 4 | 2.3 | 3 | 2 | 0.5 | 0.6 | 0.2 | 0 | 2 | 0.024 | 0.77 | 0.73 | 850 |
| | 19 | 26 | 4 | 14 | 18 | 10 | 18 | 19 | 2.3 | 3 | 2 | 0.4 | 0.4 | 0.3 | 0 | 2 | 0.019 | 0.22 | 0.21 | 850 |
| | 20 | 25 | 4 | 15 | 19 | 20 | 25 | 3 | 2.4 | 3 | 1 | 0.4 | 0.4 | 0.4 | 0 | 2 | 0.032 | 0.71 | 0.69 | 850 |
| | 21 | 26 | 4 | 14 | 18 | 18 | 11 | 19 | 2.6 | 3 | 1 | 0.4 | 0.4 | 0.3 | 0 | 2 | 0.028 | 0.40 | 0.39 | 850 |
| | 22 | 27 | 4 | 18 | 22 | 16 | 19 | 10 | 0.6 | 3 | 1 | 0.8 | 0.1 | 0.4 | 0 | 2 | 0.015 | 0.43 | 0.42 | 800 |
| | 23 | 26 | 4 | 17 | 21 | 15 | 18 | 9 | 4.3 | 3 | 2 | 0.8 | 0.3 | 0.3 | 0 | 2 | 0.016 | 0.43 | 0.41 | 800 |
| | 24 | 25 | 3 | 16 | 19 | 16 | 17 | 10 | 6.4 | 3 | 2 | 0.7 | 0.9 | 0.4 | 0 | 2 | 0.025 | 0.46 | 0.43 | 800 |
| | 25 | 26 | 1 | 20 | 21 | 18 | 17 | 11 | 2.5 | 0.6 | 2 | 0.8 | 0.5 | 0.2 | 0 | 2 | 0.021 | 0.49 | 0.46 | 800 |
| | 26 | 24 | 10 | 9 | 19 | 18 | 15 | 11 | 2.6 | 8 | 1 | 0.8 | 0.7 | 0.3 | 0 | 2 | 0.021 | 0.51 | 0.50 | 800 |
| | 27 | 26 | 4 | 16 | 20 | 16 | 20 | 11 | 2.5 | 3 | 0 | 0.4 | 0.5 | 0.2 | 0 | 2 | 0.019 | 0.43 | 0.43 | 850 |
| | 28 | 21 | 4 | 14 | 18 | 23 | 16 | 10 | 2.5 | 3 | 5 | 0.8 | 0.7 | 0.1 | 0 | 2 | 0.015 | 0.74 | 0.64 | 800 |
| | 29 | 20 | 4 | 13 | 17 | 22 | 17 | 9 | 2.6 | 3 | 8 | 0.8 | 0.5 | 0.2 | 0 | 2 | 0.028 | 0.76 | 0.59 | 800 |
| | 30 | 27 | 4 | 16 | 20 | 14 | 19 | 10 | 2.5 | 3 | 2 | 0.07 | 0.05 | 0.05 | 0 | 3 | 0.032 | 0.38 | 0.36 | 900 |
| | 31 | 28 | 4 | 16 | 20 | 14 | 18 | 10 | 2.5 | 3 | 2 | 0.03 | 0.02 | 0.03 | 0 | 3 | 0.022 | 0.37 | 0.35 | 1,000 |
| | 32 | 27 | 4 | 14 | 18 | 15 | 21 | 10 | 2.5 | 3 | 2 | 0.7 | 0.9 | 0.7 | 0 | 2 | 0.025 | 0.41 | 0.38 | 800 |
| | 33 | 28 | 4 | 15 | 19 | 15 | 19 | 10 | 2.5 | 3 | 2 | 0.6 | 0.9 | 0.3 | 0 | 2 | 0.028 | 0.39 | 0.38 | 800 |
| | 34 | 29 | 4 | 16 | 20 | 15 | 18 | 10 | 2.8 | 3 | 2 | 0.9 | 0.6 | 0.4 | 0.2 | 1 | 0.035 | 0.38 | 0.37 | 800 |
| | 35 | 19 | 4 | 22 | 26 | 16 | 17 | 9 | 2.4 | 3 | 2 | 0.4 | 0.3 | 0.05 | 0 | 6 | 0.031 | 0.57 | 0.53 | 850 |
| | 36 | 26 | 4 | 17 | 21 | 16 | 18 | 10 | 2.6 | 3 | 1 | 0.4 | 0.4 | 0.08 | 0 | 3 | 0.18 | 0.44 | 0.43 | 850 |

[Table 5]

| | No. | Al$_2$O$_3$ | SiO$_2$ Derived from alloy | SiO$_2$ Derived from mineral | SiO$_2$ Total | MgO | F in terms of CaF$_2$ | Mn in terms of MnO | Na in terms of Na$_2$O + K in terms of K$_2$O + Li in terms of Li$_2$O | Fe in terms of FeO | TiO$_2$ | Water-soluble SiO$_2$ | Water-soluble Na$_2$O | Water-soluble K$_2$O | Water-soluble Li$_2$O | CaO | C | M(I) | M(II) | Sintering temperature (°C) |
|---|---|---|---|---|---|---|---|---|---|---|---|---|---|---|---|---|---|---|---|---|
| Comparative Example | 1 | 38 | 3 | 14 | 17 | 13 | 16 | 9 | 2.4 | 2 | 1 | 0.4 | 0.4 | 0.3 | 0 | 2 | 0.019 | 0.28 | 0.27 | 850 |
| | 2 | 13 | 4 | 23 | 27 | 19 | 20 | 11 | 2.4 | 3 | 2 | 0.5 | 0.4 | 0.4 | 0 | 3 | 0.024 | 0.79 | 0.73 | 850 |
| | 3 | 18 | 4 | 28 | 32 | 15 | 15 | 10 | 2.6 | 3 | 2 | 0.4 | 0.5 | 0.3 | 0 | 3 | 0.027 | 0.54 | 0.50 | 850 |
| | 4 | 28 | 4 | 2 | 6 | 20 | 24 | 13 | 2.5 | 3 | 2 | 0.4 | 0.3 | 0.4 | 0 | 2 | 0.016 | 0.49 | 0.47 | 850 |
| | 5 | 21 | 4 | 12 | 16 | 29 | 16 | 9 | 2.4 | 3 | 2 | 0.4 | 0.7 | 0.3 | 0 | 2 | 0.018 | 0.97 | 0.91 | 850 |
| | 6 | 28 | 4 | 24 | 28 | 7 | 12 | 12 | 2.6 | 3 | 2 | 0.4 | 0.5 | 0.4 | 0 | 6 | 0.032 | 0.18 | 0.17 | 850 |
| | 7 | 22 | 4 | 13 | 17 | 15 | 28 | 9 | 2.5 | 3 | 2 | 0.5 | 0.6 | 0.5 | 0 | 2 | 0.028 | 0.48 | 0.45 | 850 |
| | 8 | 27 | 5 | 14 | 19 | 23 | 8 | 12 | 2.4 | 4 | 3 | 0.6 | 0.4 | 0.2 | 0 | 2 | 0.016 | 0.59 | 0.55 | 850 |
| | 9 | 22 | 4 | 11 | 15 | 15 | 14 | 24 | 2.5 | 3 | 2 | 0.5 | 0.3 | 0.4 | 0 | 3 | 0.017 | 0.33 | 0.31 | 850 |
| | 10 | 28 | 4 | 16 | 20 | 22 | 20 | 1 | 2.6 | 3 | 2 | 0.6 | 0.4 | 0.3 | 0 | 2 | 0.025 | 0.76 | 0.71 | 850 |
| | 11 | 27 | 4 | 14 | 18 | 19 | 17 | 11 | 0.4 | 3 | 3 | 0.5 | 0.2 | 0.2 | 0 | 2 | 0.041 | 0.50 | 0.46 | 800 |
| | 12 | 25 | 4 | 15 | 19 | 17 | 15 | 9 | 7.3 | 3 | 2 | 0.4 | 0.8 | 0.6 | 0 | 3 | 0.027 | 0.50 | 0.47 | 800 |
| | 13 | 26 | 0 | 21 | 21 | 19 | 17 | 11 | 2.5 | 0.2 | 2 | 0.5 | 0.6 | 0.7 | 0 | 2 | 0.015 | 0.51 | 0.49 | 800 |
| | 14 | 24 | 13 | 6 | 19 | 18 | 15 | 9 | 2.6 | 10 | 1 | 0.6 | 0.7 | 0.5 | 0 | 2 | 0.019 | 0.55 | 0.53 | 800 |
| | 15 | 23 | 4 | 18 | 22 | 16 | 15 | 9 | 2.4 | 3 | 2 | 0.4 | 0.5 | 0.3 | 0 | 8 | 0.015 | 0.50 | 0.47 | 850 |
| | 16 | 27 | 4 | 16 | 20 | 14 | 19 | 10 | 2.5 | 3 | 2 | 1.5 | 1.2 | 0.3 | 0 | 3 | 0.028 | 0.38 | 0.36 | 600 |
| | 17 | 27 | 4 | 16 | 20 | 14 | 19 | 10 | 2.5 | 3 | 2 | 1.8 | 0.5 | 1.0 | 0 | 3 | 0.021 | 0.38 | 0.36 | 600 |
| | 18 | 25 | 4 | 16 | 20 | 15 | 20 | 10 | 2.5 | 3 | 2 | 1.7 | 1.0 | 0.9 | 0 | 3 | 0.023 | 0.43 | 0.41 | 600 |
| | 19 | 16 | 4 | 17 | 21 | 24 | 21 | 8 | 2.5 | 3 | 2 | 0.6 | 0.5 | 0.2 | 0 | 3 | 0.026 | 1.00 | 0.92 | 850 |
| | 20 | 34 | 4 | 7 | 11 | 10 | 11 | 19 | 2.4 | 3 | 7 | 0.4 | 0.6 | 0.2 | 0 | 3 | 0.029 | 0.19 | 0.17 | 850 |
| | 21 | 21 | 4 | 14 | 18 | 21 | 14 | 9 | 2.5 | 3 | 10 | 0.5 | 0.7 | 0.3 | 0 | 2 | 0.018 | 0.70 | 0.53 | 800 |
| | 22 | 26 | 4 | 16 | 20 | 15 | 20 | 10 | 2.5 | 3 | 2 | 0.4 | 0.7 | 0.2 | 0 | 2 | 0.43 | 0.42 | 0.39 | 850 |

EP 3 254 798 B1

Note that the balance of each of the steel sheet composition shown in the above Table 1 and the wire composition shown in the above Table 2 includes Fe and inevitable impurities. "M (I) " shown in the above Tables 4 and 5 indicates a value of $[MgO]/([Al_2O_3] + [MnO])$, and "M (II)" indicates a value of $[MgO]/([Al_2O_3] + [MnO] + [TiO_2])$.

The respective fluxes of Examples and Comparative Examples were evaluated for the diffusion hydrogen content in the weld metal, the moisture-absorption amount of the flux, the bead appearance, the bead shape, the slag removability, the arc stability and the welding defects (intrinsic and extrinsic).

<Diffusion Hydrogen Content>

A diffusion hydrogen content in the weld metal was measured based on the method defined by JIS Z 3118: 2007 in principle. Note that a welding condition A shown in Table 3 was adopted as the welding condition. In Examples and Comparative Examples, samples having the diffusion hydrogen content of 3.5 ml/100 g or less were rated as pass.

<Moisture-Absorption Amount>

A moisture-absorption amount was evaluated based on a moisture-absorption amount after a forcible moisture absorption for two hours. Specifically, after re-drying of the flux, which had a particle size of 500 to 850 $\mu$m, at 250°C for one hour, moisture was forcibly absorbed in the flux for two hours under conditions of a temperature of 30°C and a relative humidity of 80%, and then the amount of moisture contained in the flux was measured using a KF (Karl Fischer's) method. Samples in which the KF moisture amount after the moisture absorption for two hours was 500 ppm or less were rated as having good resistance to moisture-absorption.

<Bead Appearance>

The bead appearance, which is the evaluation mainly relating to the waved shape and glaze of the bead, was evaluated by visually observing a welded part. As a result, samples having beads with metallic glaze without any disturbed part of the bead waved shape were rated "A"; samples having beads with metallic glaze and one disturbed part of the bead waved shape per unit welding length (1 m) were rated "B"; samples having beads without any metallic glaze and with two to four disturbed parts of the bead waved shape per unit welding length (1 m) were rated "C"; and samples having beads without any metallic glaze and with five or more disturbed parts of the bead waved shape per unit welding length (1m) were rated "D". In Examples and Comparative Examples, the samples rated as "A" or "B" were determined to be pass.

<Bead Shape>

The bead shape, mainly regarding uneven part of the bead and wettability to the base metal, was evaluated by visually observing the welded part. As a result, samples having beads with a very good shape were rated "A"; samples having beads with a good shape were rated "B"; samples having beads with a slightly defective shape were rated "C"; and samples having beads with a defective shape were rated "D". In Examples and Comparative Examples, the samples rated as "A" or "B" were determined to be pass.

<Slag Removability>

The slag removability was evaluated based on the easiness of slag removal and the presence or absence of seizure. Specifically, samples from which the slag was naturally removed with no seizure were rated "A"; samples from which the slag was naturally removed with three or less seizures per unit welding length (1 m) were rated "B"; samples from which the slag was not naturally removed with four to nine seizures per unit welding length (1 m) were rated "C"; and samples from which the slag was not naturally removed with ten or more seizures per unit welding length (1 m) were rated "D". In Examples and Comparative Examples, the samples rated as "A" or "B" were determined to be pass.

<Arc Stability>

The arc stability was evaluated based on the amplitudes of current and voltage during welding. Specifically, samples having the welding current of $\pm 50$ A and the arc voltage of $\pm 2V$ were rated "A"; samples having the welding current of $\pm 100$ A and the arc voltage of $\pm 2V$ were rated "B"; samples having the welding current of $\pm 100$ A and the arc voltage of $\pm 4V$ were rated "C"; and samples in which welding was difficult to perform were rated "D". In Examples and Comparative Examples, the samples rated as "A" or "B" were determined to be pass.

<Weld Defects>

Welding defects (intrinsic), which is the evaluation mainly relating to welding defects generated in the welded metal, such as a pore defect, a slag inclusion and lack of fusion, were evaluated. Samples with no these welding defects were rated "A"; samples having an occurrence rate of welding defects per unit welding length (1m) of 0.5% or less were rated "B"; samples having an occurrence rate of the welding defects per unit welding length (1 m) of more than 0.5% and 1.0% or less were rated "C"; and samples having an occurrence rate of the welding defects per unit welding length (1m) exceeding 1.0% were rated "D". In Examples and Comparative Examples, the samples rated as "A" or "B" were determined to be pass.

Note that the welding defects (intrinsic) were detected by using an X-ray radiograph taken in accordance with JIS Z 3104:1995. The occurrence rate of welding defects (intrinsic) per unit welding length (1 m) in the evaluation of the welding defects was determined by measuring the size (length) of each defect (flaw) in accordance with JIS Z 3104:1995; calculating the total length of defects (flaws); and then dividing the thus obtained total length by an effective length of a test section, followed by expression in terms of unit welding length.

Meanwhile, welding defects (extrinsic), which is the evaluation mainly relating to welding defects generated at the surface of the weld metal, such as an undercut and a pockmark, were also evaluated. Samples with no these welding defects were rated "A"; samples having an occurrence rate of the welding defects per unit welding length (1 m) of 0.5% or less were rated "B"; samples having an occurrence rate of the welding defects per unit welding length (1 m) of more than 0.5% and 1.0% or less were rated "C"; and samples having an occurrence rate of occurrence of the welding defects per unit welding length (1 m) exceeding 1.0% were rated "D". In Examples and Comparative Examples, the samples rated as "A" or "B" were determined to be pass.

Note that the welding defects (extrinsic) were visually detected. The occurrence rate of welding defects (extrinsic) per unit welding length (1 m) in the evaluation of the welding defects was determined by visually measuring the length of each undercut, pockmark and the like; calculating the total length of welding defects (extrinsic defects) ; and then dividing the thus obtained total length by an effective length of the same test section as the welding defects (intrinsic defects), followed by expression in terms of unit welding length.

The above-mentioned evaluation results are collectively shown in Tables 6 and 7 below. Note that in Tables 6 and 7, numerical values of the diffusion hydrogen contents in the weld metals or the moisture-absorption amounts of the fluxes that did not meet evaluation criteria are underlined.

[Table 6]

| | No. | Diffusion hydrogen content (ml/100 g) | Moisture-absorption amount (ppm) | Welding conditions | | | | | | | | | | | |
| | | | | Condition A | | | | | | Condition B | | | | | |
| | | | | Bead appearance | Bead shape | Slag removability | Arc stability | Welding defect (intrinsic) | Welding defect (extrinsic) | Bead appearance | Bead shape | Slag removability | Arc stability | Welding defect (intrinsic) | Welding defect (extrinsic) |
|---|---|---|---|---|---|---|---|---|---|---|---|---|---|---|---|
| Example | 1 | 2.3 | 356 | A | A | A | A | A | A | A | A | A | A | A | A |
| | 2 | 2.1 | 347 | A | B | A | A | A | A | A | B | A | A | A | A |
| | 3 | 2.6 | 367 | A | B | B | A | A | A | A | B | B | A | A | A |
| | 4 | 2.5 | 378 | A | B | B | A | A | A | A | B | B | A | A | A |
| | 5 | 3.4 | 489 | A | B | A | A | A | B | A | B | A | A | A | B |
| | 6 | 3.3 | 423 | B | B | A | A | A | B | B | B | A | A | A | B |
| | 7 | 2.4 | 346 | A | B | A | A | A | A | A | B | A | A | A | A |
| | 8 | 2.3 | 334 | A | B | B | A | A | B | A | B | B | A | A | B |
| | 9 | 2.3 | 321 | A | B | B | A | A | A | A | B | B | A | A | A |
| | 10 | 2.5 | 384 | A | A | B | A | A | A | A | A | B | A | A | A |
| | 11 | 3.5 | 472 | B | B | A | A | B | B | B | B | A | A | B | B |
| | 12 | 2.3 | 384 | A | A | B | A | A | B | A | A | B | A | A | B |
| | 13 | 2.4 | 356 | B | B | A | A | A | A | B | B | A | A | A | A |
| | 14 | 2.2 | 322 | A | A | B | A | A | B | A | A | B | A | A | B |
| | 15 | 2.4 | 351 | B | B | B | A | A | A | B | B | B | A | A | A |
| | 16 | 3.4 | 482 | A | B | A | A | B | B | A | B | A | A | B | B |
| | 17 | 2.1 | 302 | A | B | B | A | A | A | A | B | B | A | A | A |
| | 18 | 3.2 | 443 | A | B | A | A | A | B | A | B | A | A | A | B |
| | 19 | 2.4 | 362 | A | A | B | A | A | A | A | A | B | A | A | A |
| | 20 | 2.2 | 354 | A | B | A | A | A | A | A | B | A | A | A | A |
| | 21 | 2.2 | 312 | A | A | B | A | A | B | A | A | B | A | A | B |
| | 22 | 2.5 | 382 | B | B | A | B | A | A | B | B | A | B | A | A |
| | 23 | 3.1 | 435 | B | B | A | B | A | A | B | B | A | B | A | A |
| | 24 | 3.5 | 487 | A | A | A | A | A | B | A | A | A | A | A | B |
| | 25 | 2.9 | 421 | B | B | A | A | A | B | B | B | A | A | A | B |
| | 26 | 2.7 | 367 | B | B | B | A | A | A | B | B | B | A | A | A |
| | 27 | 2.3 | 331 | A | A | A | A | A | A | A | A | A | A | A | A |
| | 28 | 2.9 | 401 | A | A | A | A | A | A | A | A | A | A | A | A |
| | 29 | 3.0 | 412 | A | B | A | A | A | A | A | B | A | A | A | A |
| | 30 | 1.7 | 256 | A | A | A | A | A | A | A | A | A | A | A | A |
| | 31 | 1.5 | 221 | A | A | A | A | A | A | A | A | A | A | A | A |
| | 32 | 2.8 | 456 | A | A | A | A | A | A | A | A | A | A | A | A |
| | 33 | 3.3 | 373 | A | A | A | A | A | A | A | A | A | A | A | A |
| | 34 | 3.4 | 373 | A | A | A | A | A | A | A | A | A | A | A | A |
| | 35 | 2.5 | 384 | B | B | A | A | A | A | B | B | A | A | A | A |
| | 36 | 2.6 | 375 | A | A | A | A | A | B | A | A | A | A | A | A |

[Table 7]

| | No. | Diffusion hydrogen content (ml/100 g) | Moisture-absorption amount (ppm) | Welding conditions | | | | | | | | | | | |
|---|---|---|---|---|---|---|---|---|---|---|---|---|---|---|---|
| | | | | Condition A | | | | | | Condition B | | | | | |
| | | | | Bead appearance | Bead shape | Slag removability | Arc stability | Welding defect (intrinsic) | Welding defect (extrinsic) | Bead appearance | Bead shape | Slag removability | Arc stability | Welding defect (intrinsic) | Welding defect (extrinsic) |
| Comparative Example | 1 | 2.2 | 375 | B | D | B | B | B | B | B | D | B | B | B | B |
| | 2 | 2.6 | 386 | B | C | B | B | B | B | B | C | B | B | B | B |
| | 3 | 2.2 | 375 | B | B | D | B | B | B | B | B | C | B | B | B |
| | 4 | 2.7 | 394 | C | C | B | B | B | B | C | C | B | B | B | B |
| | 5 | 5.1 | 635 | B | C | B | B | D | D | B | C | B | B | D | D |
| | 6 | 1.8 | 284 | B | B | D | B | B | B | B | B | C | B | B | B |
| | 7 | 2.3 | 383 | B | D | B | B | B | B | B | D | B | B | B | B |
| | 8 | 3.4 | 493 | B | B | B | B | B | C | B | B | B | B | B | C |
| | 9 | 2.5 | 358 | B | B | D | B | B | B | B | B | C | B | B | B |
| | 10 | 3.1 | 465 | B | B | B | B | B | C | B | B | B | B | B | C |
| | 11 | 2.7 | 412 | C | C | B | D | B | B | C | C | B | D | B | B |
| | 12 | 3.3 | 601 | C | C | B | D | B | B | C | C | B | D | B | B |
| | 13 | 2.8 | 423 | B | B | B | B | B | C | B | B | B | B | B | C |
| | 14 | 2.7 | 431 | C | C | D | B | B | B | C | C | C | B | B | B |
| | 15 | 2.5 | 436 | D | D | B | B | B | B | D | D | B | B | B | B |
| | 16 | 4.8 | 617 | A | A | A | A | A | A | A | A | A | A | A | A |
| | 17 | 5.1 | 647 | A | A | A | A | A | A | A | A | A | A | A | A |
| | 18 | 5.3 | 674 | A | A | A | B | A | A | A | A | A | B | A | A |
| | 19 | 3.9 | 556 | A | A | A | A | A | A | A | A | A | A | A | A |
| | 20 | 1.9 | 302 | B | B | D | B | B | B | B | B | C | B | B | B |
| | 21 | 2.9 | 423 | B | C | B | B | B | B | B | C | B | B | B | B |
| | 22 | 2.3 | 321 | D | C | A | A | A | D | D | C | A | A | A | C |

The fluxes in Examples Nos. 1 to 36 shown in Table 6 satisfied the scope of the present invention, and thus had excellent bead appearance, bead shape, slag removability and arc stability, and did not also cause any welding defect (intrinsic and extrinsic). Furthermore, in these fluxes, the moisture-absorption amount of the flux and the diffusion hydrogen content in the weld metal were low.

In the flux of Comparative Example No. 1 shown in Table 7, since the $Al_2O_3$ content exceeded 35% by mass, the bead shape was degraded. In the flux of Comparative Example No. 2, since the $Al_2O_3$ content was less than 15% by mass, the bead shape was degraded. In the flux of Comparative Example No. 3, since the $SiO_2$ content exceeded 30% by mass, the slag removability was degraded. In the flux of Comparative Example No. 4, since the $SiO_2$ content was less than 10% by mass, the bead appearance and the bead shape were degraded.

In the flux of Comparative Example No. 5, since the MgO content exceeded 25% by mass, the bead shape was degraded and furthermore the welding defects occurred inside and at the surface of a weld metal. Further, since M(I) exceeded 0.80, the diffusion hydrogen content in the weld metal and the moisture-absorption amount of the flux were increased. In the flux of Comparative Example No. 6, since the MgO content was less than 10% by mass, and M(I) was less than 0.20, seizure was occurred and the slag removability was degraded. In the flux of Comparative Example No. 7, the F content exceeded 25% by mass, the bead shape was degraded. In the flux of Comparative Example No. 8, since the F content was less than 10% by mass, the welding defects, such as undercuts and pockmarks, occurred.

In the flux of Comparative Example No. 9, the Mn content (in terms of MnO) exceeded 20% by mass, seizure occurred and the slag removability was degraded. In the flux of Comparative Example No. 10, since the Mn content (in terms of MnO) was less than 3% by mass, the welding defects, such as undercuts and pockmarks, occurred at the surface of a weld metal. In the flux of Comparative Example No. 11, the total of the Na content (in terms of $Na_2O$), the K content (in terms of $K_2O$) and the Li content (in terms of $Li_2O$) was less than 0.5% by mass, the arc stability was drastically decreased and the bead appearance and the bead shape were degraded. As a result, the welding was difficult to perform. In the flux of Comparative Example No. 12, since the total of the Na content (in terms of $Na_2O$), the K content (in terms of $K_2O$) and the Li content (in terms of $Li_2O$) exceeded 6.5% by mass, the arc stability was drastically degraded, and the bead appearance and the bead shape were degraded. Furthermore, the moisture-absorption amount of this flux was increased.

In the flux of Comparative Example No. 13, since the Fe content (in terms of FeO) was less than 0.5% by mass, the welding defects, such as undercuts and pockmarks, occurred at the surface of a weld metal. In the flux of Comparative Example No. 14, since the Fe content (in terms of FeO) exceeded 8% by mass, the bead appearance and the bead shape were degraded and further the slag removability was also degraded. In the flux of Comparative Example No. 15, since the CaO content exceeded 6% by mass, the bead appearance and bead shape were degraded.

In the flux of Comparative Example No. 16, since the water-soluble $SiO_2$ content and the water-soluble $Na_2O$ exceeded 1.0% by mass respectively, the diffusion hydrogen content in the weld metal and the moisture-absorption amount of the flux were increased. In the flux of Comparative Example No. 17, since the water-soluble $SiO_2$ content exceeded 1.0% by mass and a water-soluble $K_2O$ content exceeded 0.8% by mass, the diffusion hydrogen content in the weld metal and the moisture-absorption amount of the flux were increased. In the flux of Comparative Example No. 18, since the water-soluble $SiO_2$ content exceeded 1.0% by mass and the water-soluble $K_2O$ content exceeded 0.8% by mass, the diffusion hydrogen content in the weld metal and the moisture-absorption amount of the flux were increased.

In the flux of Comparative Example No. 19, since M(I) exceeded 0.80, the diffusion hydrogen content in the weld metal and the moisture-absorption amount of the flux were increased. In the flux of Comparative Example No. 20, since M(I) was less than 0.20, seizure occurred and the slag removability was degraded. In the flux of Comparative Example No. 21, since the $TiO_2$ content exceeded 8% by mass, the bead shape was degraded. In the flux of Comparative Example No. 22, since the C content exceeded 0.2% by mass, the pockmarks occurred at the surface of a weld metal and the bead appearance and the bead shape were degraded.

As can be seen from the results mentioned above, it is confirmed that the use of the flux according to the present invention can make the welding workability better and can reduce the moisture-absorption amount of the flux and the diffusion hydrogen content in the weld metal, even when either an alternating current or a direct current welding is performed.

The present invention includes the following aspects. First Aspect:

A flux for submerged arc welding including:

$Al_2O_3$: 15 to 35% by mass;
$SiO_2$: 10 to 30% by mass;
MgO: 10 to 25% by mass;
F in terms of $CaF_2$: 10 to 25% by mass;
Mn in terms of MnO: 3 to 20% by mass;
a total of at least one or more of Na in terms of $Na_2O$, K in terms of $K_2O$ and Li in terms of $Li_2O$: 0.5 to 6.5% by mass;
Fe in terms of FeO: 0.5 to 8% by mass;

CaO: 6% by mass or less;
water-soluble SiO$_2$: 1.0% by mass or less;
water-soluble Na$_2$O: 1.0% by mass or less; and
water-soluble K$_2$O: 0.8% by mass or less, wherein
the flux satisfies the following numerical expression (I), where [Al$_2$O$_3$] is the Al$_2$O$_3$ content, [MgO] is the MgO content, and [MnO] is a content as the Mn in terms of MnO.
[Equation 5]

$$0.20 \leqq \frac{[MgO]}{[Al_2O_3]+[MnO]} \leqq 0.80 \quad \cdots \quad (\,I\,)$$

Second Aspect:

The flux for submerged arc welding according to the first aspect further including water-soluble Li$_2$O: 0.3% by mass or less .

Third Aspect:

The flux for submerged arc welding according to the first or second aspect further including TiO$_2$: 8% by mass or less.

Fourth Aspect:

The flux for submerged arc welding according to the third aspect, which satisfies the following numerical expression (II), where [TiO$_2$] is the TiO$_2$ content.
[Equation 6]

$$0.20 \leqq \frac{[MgO]}{[Al_2O_3]+[MnO]+[TiO_2]} \leqq 0.80 \quad \cdots \quad (\,I\,I\,)$$

Fifth Aspect:

The flux for submerged arc welding according to any one of the first to fourth aspects, wherein a C content is 0.2% by mass or less.

Sixth Aspect:

The flux for submerged arc welding according to any one of the first to fifth aspects, which is obtained by sintering at 800°C or higher.

**Claims**

1. A flux for submerged arc welding, comprising:

Al$_2$O$_3$: 15 to 35% by mass;
SiO$_2$: 10 to 25% by mass;
MgO: 10 to 25% by mass;
F in terms of CaF$_2$: 10 to 25% by mass;
Mn in terms of MnO: 3 to 20% by mass;
a total of at least one or more of Na in terms of Na$_2$O, K in terms of K$_2$O and Li in terms of Li$_2$O: 0.5 to 6.5% by mass;
Fe in terms of FeO: 0.5 to 8% by mass;
CaO: 6% by mass or less (including 0% by mass);

$TiO_2$: 8% by mass or less (including 0% by mass);
water-soluble $SiO_2$: 0.01 to 1.0% by mass;
water-soluble $Na_2O$: 0.01 to 1.0% by mass; and
water-soluble $K_2O$: 0.01 to 0.8% by mass,

wherein a C content is 0.2% by mass or less (including 0% by mass), and the flux satisfies the following numerical expression (I), where $[Al_2O_3]$ is the $Al_2O_3$ content, [MgO] is the MgO content, and [MnO] is a content as the Mn in terms of MnO.

[Equation 1]

$$0.20 \leqq \frac{[MgO]}{[Al_2O_3]+[MnO]} \leqq 0.80 \quad \cdot \cdot \cdot \; ( \; I \; )$$

2. The flux for submerged arc welding according to claim 1, further comprising:
water-soluble $Li_2O$: 0.3% by mass or less (including 0% by mass).

3. The flux for submerged arc welding according to claim 1, which satisfies the following numerical expression (II), where $[TiO_2]$ is the $TiO_2$ content.

[Equation 2]

$$0.20 \leqq \frac{[MgO]}{[Al_2O_3]+[MnO]+[TiO_2]} \leqq 0.80 \quad \cdot \cdot \cdot \; ( \; II \; )$$

**Patentansprüche**

1. Flussmittel zum Unterpulverschweißen, umfassend:

$Al_2O_3$: 15 bis 35 Massen-%;
$SiO_2$: 10 bis 25 Massen-%;
MgO: 10 bis 25 Massen-%;
F in Bezug auf $CaF_2$: 10 bis 25 Massen-%;
Mn in Bezug auf MnO: 3 bis 20 Massen-%;
insgesamt mindestens eines oder mehrere von Na in Bezug auf $Na_2O$, K in Bezug auf $K_2O$ und Li in Bezug auf $Li_2O$: 0,5 bis 6,5 Massen-%;
Fe in Bezug auf FeO: 0,5 bis 8 Massen-%;
CaO: 6 Massen-% oder weniger (0 Massen-% einschließend);
$TiO_2$: 8 Massen-% oder weniger (0 Massen-% einschließend);
wasserlösliches $SiO_2$: 0,01 bis 1,0 Massen-%;
wasserlösliches $Na_2O$: 0,01 bis 1,0 Massen-%; und
wasserlösliches $K_2O$: 0,01 bis 0,8 Massen-%,

wobei ein C-Gehalt 0,2 Massen-% oder weniger (0 Massen-% einschließend) beträgt und das Flussmittel dem nachstehenden numerischen Ausdruck (I), bei dem $[Al_2O_3]$ der $Al_2O_3$-Gehalt ist, [MgO] der MgO-Gehalt ist und [MnO] ein Gehalt des Mn in Bezug auf MnO ist, genügt.

[Gleichung 1]

$$0.20 \leqq \frac{[MgO]}{[Al_2O_3]+[MnO]} \leqq 0.80 \quad \cdot \cdot \cdot \; ( \; I \; )$$

2. Flussmittel zum Unterpulverschweißen nach Anspruch 1, weiter umfassend:
wasserlösliches $Li_2O$: 0,3 Massen-% oder weniger (0 Massen-% einschließend).

3. Flussmittel zum Unterpulverschweißen nach Anspruch 1, welches dem nachstehenden numerischen Ausdruck (II),

bei dem [TiO$_2$] der TiO$_2$-Gehalt ist, genügt.
[Gleichung 2]

$$0.20 \leqq \frac{[MgO]}{[Al_2O_3]+[MnO]+[TiO_2]} \leqq 0.80 \qquad \cdots (\mathrm{I\,I})$$

**Revendications**

1. Flux pour soudage à l'arc submergé comprenant :

   Al$_2$O$_3$ : 15 à 35 % en masse ;
   SiO$_2$ : 10 à 25 % en masse ;
   MgO : 10 à 25 % en masse ;
   F en termes de CaF$_2$ : 10 à 25 % en masse ;
   Mn en termes de MnO : 3 à 20 % en masse ;
   un total d'au moins un ou plusieurs de Na en termes de Na$_2$O, K en termes de K$_2$O et Li en termes de Li$_2$O :
   0,5 à 6,5 % en masse ;
   Fe en termes de FeO : 0,5 à 8 % en masse ;
   CaO : 6 % en masse ou moins (y compris 0 % en masse) ;
   TiO$_2$ : 8 % en masse ou moins (y compris 0 % en masse) ;
   SiO$_2$ hydrosoluble : 0,01 à 1,0 % en masse ;
   Na$_2$O hydrosoluble : 0,01 à 1,0 % en masse ; et
   K$_2$O hydrosoluble : 0,01 à 0,8 % en masse,
   dans lequel une teneur en C est de 0,2 % en masse ou moins (y compris 0 % en masse), et le flux satisfait
   l'expression numérique suivante (I), où [Al$_2$O$_3$] est la teneur en Al$_2$O$_3$, [MgO] est la teneur en MgO et [MnO]
   est une teneur en Mn en termes de MnO.
   [Equation 1]

$$0.20 \leqq \frac{[MgO]}{[Al_2O_3]+[MnO]} \leqq 0.80 \qquad \cdots (\mathrm{I})$$

2. Flux pour soudage à l'arc submergé selon la revendication 1, comprenant en outre :
   LiO$_2$ hydrosoluble : 0,3 % en masse ou moins (y compris 0 % en masse).

3. Flux pour soudage à l'arc submergé selon la revendication 1, qui satisfait l'expression numérique suivante (II), où
   [TiO$_2$] est la teneur en TiO$_2$.
   [Equation 2]

$$0.20 \leqq \frac{[MgO]}{[Al_2O_3]+[MnO]+[TiO_2]} \leqq 0.80 \qquad \cdots (\mathrm{I\,I})$$

*Fig. 1*

**EP 3 254 798 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S4970839 A
- JP S5395144 A
- JP S5187444 A
- JP H0999392 A
- JP S6268695 A
- WO 2008072835 A1